# EUROPÄISCHE PATENTSCHRIFT

(11) **EP 1 641 148 B1**
(45) Veröffentlichungstag und Bekanntmachung des Hinweises auf die Patenterteilung: **31.10.2007**
(21) Anmeldenummer: 04090375.9
(22) Anmeldetag: 24.09.2004
(51) Int. Cl.: H04B 10/08, H04J 14/02

(54) **Verfahren zur Optimierung der Lichtleistung in einem optischen Netzwerk und optisches Netzwerk**
Method and apparatus for optimizing the optical power in an optical network.
Procédé et systèm d'optimisation de la puissance optique dans un réseau optique.

(43) Veröffentlichungstag der Anmeldung: 29.03.2006
(73) Patentinhaber: Infineon Technologies AG, 81669 München (DE)
(72) Erfinder: Lichtenegger, Thomas, 93087 Alteglofsheim (DE); Hurt, Hans, 93049 Regensburg (DE); Wirsing, Markus, 93049 Regensburg (DE); Meier, Jörg, 90489 Nürnberg (DE)
(74) Vertreter: Dilg, Haeusler, Schindelmann Patentanwaltsgesellschaft mbH

(56) Entgegenhaltungen:
- EP-A1- 0 527 279
- EP-A2- 0 331 255
- WO-A1-02/067480

## Beschreibung

Die Erfindung betrifft ein Verfahren zur Optimierung der Lichtleistung in einem optischen Netzwerk, das eine Mehrzahl von Netzknoten mit jeweils einem Sender und einem Empfänger aufweist, sowie ein entsprechendes optisches Netzwerk.

Es ist bekannt, Daten über ein optisches Netzwerk zu übertragen. Ein optisches Netzwerk weist eine Vielzahl von Netzknoten auf, die entsprechend einer bestimmten Topologie, beispielsweise einer Ringtopologie und einer Sterntopologie angeordnet sind. Die einzelnen Netzknoten weisen jeweils einen Sender und einen Empfänger auf. Der Empfänger wandelt das von einem anderen Netzknoten ausgesandte optische Signal in ein elektrisches Signal um. Eine Intelligenz im Netzknoten wertet das elektrische Signal aus und prüft insbesondere, ob die darin enthaltenen Informationen für den eigenen Netzknoten bestimmt oder weiterzuleiten zu sind. Das elektrische Signal wird im letzteren Fall durch den Sender wieder in ein optisches Signal gewandelt und an einen weiteren Netzknoten gesandt.

Zur Übertragung von Audio-, Video-, Sprach- und Steuerdaten über Lichtwellenleiter in Multimedia-Netzwerken und insbesondere im Automotiv-Bereich hat sich in den letzten Jahren das serielle Kommunikationssystem MOST (Media Oriented System Transport) etabliert. Die MOST-Technologie ist inzwischen zum Standard für gegenwärtige und zukünftige Anforderungen in der Multimedia-Vernetzung in Kraftfahrzeugen geworden. Ein MOST-System stellt eine Bandbreite von bis zu 24,8 Mbit/s zur Verfügung. Die Netzwerktopologie bei MOST-Systemen ist in der Regel eine Ringtopologie oder eine Bustopologie.

Die Lichtleistung in einem optischen Netzwerk wird bestimmt durch die von den einzelnen optischen Sendern der Netzknoten ausgesandten Lichtleistungen. Die Lichtleistung wird dabei derart gewählt, dass unter Berücksichtigung der Streckendämpfung zwischen einem betrachteten Sender und dem zugehörigen Empfänger die am Empfänger detektierte Lichtleistung ausreichend groß für eine sichere Signaldetektion ist.

Das Dokument EP-A-0527279 beschreibt eine Vorrichtung zum automatischen Anpassen der optischen Leistung einer Mehrzahl von optischen Transmittern. Die von den optischen Transmitttern ausgehenden Signale werden an einen optischen Repeater übermittelt, der in Abhängigkeit von der optischen Leistung der empfangenen Signale die Ausgangsleistung der einzelnen optischen Transmitter steuert. Weiter ist aus dem Dokument EP-A-0331255 ein aus einem optischen Sender und einem optischen Empfänger bestehendes Übertragungssystem bekannt, in dem die optische Leistung des Senders in Abhängigkeit von der an dem Empfänger eingehenden optischen Leistung gesteuert wird.

Der vorliegenden Erfindung liegt die Aufgabe zugrunde, die Lichtleistung in einem optischen Netzwerk zu optimieren und hierzu ein geeignetes Verfahren und ein geeignetes optisches Netzwerk zur Verfügung zu stellen.

Diese Aufgabe wird erfindungsgemäß durch ein Verfahren mit den Merkmalen des Anspruchs 1 sowie ein optisches Netzwerk mit den Merkmalen des Anspruchs 17 gelöst. Bevorzugte und vorteilhafte Ausgestaltungen der Erfindung sind in den Unteransprüchen vorgesehen.

Danach zeichnet sich die erfindungsgemäße Lösung durch den Gedanken aus, dass die optische Lichtleistung des an einem Netzknoten empfangenen optischen Signals zunächst erfasst und dann festgestellt wird, ob die optische Lichtleistung innerhalb oder außerhalb eines definierten Bereiches liegt. Sofern die Lichtleistung außerhalb des definierten Bereiches liegt, wird ein Steuersignal an den Netzknoten, der das optische Signal ausgesandt hat, erzeugt, die Lichtleistung entweder heraufzusetzen oder herabzusetzen. Das Steuersignal wird an den aussendenden Netzknoten gesandt und dieser setzt entsprechend dem erhaltenen Steuersignal die Lichtleistung des ausgesandten optischen Signals dann herauf oder herab. Das Verfahren kann im Rahmen einer Regelung solange wiederholt werden, bis die am zweiten Netzknoten erfasste optische Lichtleistung innerhalb des definierten Bereiches liegt.

Die erfindungsgemäße Lösung ermöglicht es, die von einem optischen Sender eines Netzknotens ausgesandte Lichtleistung in Abhängigkeit von der Streckendämpfung zwischen dem Sender und dem zugehörigen Empfänger während des Betriebes auf einen geeigneten Wert einzustellen und dadurch die optische Leistung in dem optischen Netzwerk zu optimieren. Die Erfindung stellt dabei zum einen sicher, dass das von dem Empfänger empfangene Signal ausreichend groß ist, um eine sichere Signaldetektion zu ermöglichen. Zum anderen werden ein ineffizienter Betrieb sowie ein "Overload" beim Empfänger im Falle zu großer optischer Lichtleistungen verhindert.

Die optische Lichtleistung, die einem Empfänger zur Verfügung steht, ist von einer Vielzahl von Einflussparametern abhängig. Beispiele für solche Einflussparameter sind z.B. die Länge und Dämpfung der Lichtleitfaser, über die das Licht übertragen wird, die Umgebungstemperatur, Alterungsprozesse bei der Lichtleitfaser und dem Sender, herstellungsbedingte Abweichungen sowie eventuell auftretende optische Kopplungen. Die erfindungsgemäße Lösung ermöglicht es, trotz dieser Vielzahl von Einflussparametern auf die Streckendämpfung zwischen einem Sender und einem Empfänger stets diejenige ideale optische Leistung am Sender einzustellen, die zu einer optischen Lichtleistung beim Empfänger führt, die innerhalb eines gewünschten, idealen Bereiches liegt.

Insbesondere wird auch sicher ein Teilausfall des optischen Systems verhindert, der dann auftreten könnte, wenn aufgrund einer sehr hohen Streckendämpfung die optische Lichtleistung beim Empfänger nicht mehr ausreicht für eine Singaldetektion. Weiter wird durch die Möglichkeit, bei einer geringen Streckendämpfung die optische Lichtleistung des Senders zu reduzieren, die Lebensdauer des optischen Senders erhöht und damit die Zuverlässigkeit des Gesamtbauelementes. Dies ist insbesondere bei Halbleiterlasern, etwa bei vertikalemittierenden Laserdioden (VCSEL) von großem Vorteil.

Die Lichtleistung der jeweiligen Sender der Netzknoten des optischen Netzwerkes ist naturgemäß abhängig von der Streckendämpfung der Lichtübertragungsstrecke jeweils zwischen einem Sender und einem Empfänger. Die eingestellten Lichtleistungen der Sender bzw. die an den Empfängern erfassten Lichtleistungen reflektieren somit die Streckendämpfung jeweils zwischen Sender und Empfänger. Ein weiterer Vorteil der vorliegenden Erfindung besteht dementsprechend darin, dass über die eingestellten bzw. die erfassten Lichtleistungen die Streckedämpfung auf den einzelnen Strecken des optischen Netzwerkes bzw. Änderungen der Streckendämpfung erfasst und für die Diagnose des optischen Netzwerkes eingesetzt werden können.

Die erfindungsgemäße Lösung verbessert somit auch die Diagnosefähigkeit des optischen Netzwerkes, wobei Änderungen der Dämpfung auf bestimmten Strecken beispielsweise in einem zentralen Speicher abgelegt und mittels eines Auswertsystems abgerufen und ausgewertet werden können. Auch können geeignete Schnittstellen definiert werden, über die die Informationen betreffend die jeweiligen Streckendämpfungen erfasst werden können. Diese verbesserten Diagnosemöglichkeiten können allein auf der Grundlage von Software, also ohne zusätzliche Hardware realisiert werden.

Es wird darauf hingewiesen, dass der Begriff "optisches Signal" im Rahmen der vorliegenden Erfindung als Synonym für ein optisches Datensignal steht, d.h. ein entsprechend zu übertragender Daten moduliertes optisches Signal bezeichnet. Die zu übertragenden Daten können dabei sowohl Steuer- bzw. Kontroll- bzw. Signalisierungsdaten als auch Nutzdaten umfassen.

In einer bevorzugten Ausgestaltung der Erfindung wird das Steuersignal über das optische Netzwerk an den ersten Netzknoten übertragen. Das optische Netzwerk selbst dient somit der Steuersignalübertragung und einem Feedback an den Sender des aussendenden Netzknotens. Grundsätzlich ist es jedoch ebenfalls denkbar, dass die Steuersignale über andere Verbindungen, beispielsweise über ein lokales Netzwerk und/oder das Internet oder über eine Funkverbindung an den aussendenden Netzknoten übersandt werden.

In einer weiteren bevorzugten Ausgestaltung ist vorgesehen, dass die Signalübertragung in dem optischen Netzwerk einem Übertragungsprotokoll unterliegt, das mindestens einen Nutzkanal zur Übertragung von Nutzdaten und mindestens einen Kontrollkanal zur Übertragung von Kontroll- und Signalisierungsdaten definiert. Dabei wird das Steuersignal auf dem Kontrollkanal zum ersten Netzknoten übertragen. Der Kontrollkanal des optischen Netzwerks dient also der Übertragung der Steuersignale.

Insbesondere ist bevorzugt vorgesehen, dass das empfangene optische Signal mittels des Empfängers des zweiten Netzknoten in ein elektrisches Signal gewandelt wird, anschließend ein elektronischer Baustein für den Fall, dass die erfasste optische Lichtleistung außerhalb des definierten Bereichs liegt, dem elektrischen Signal das Steuersignal zufügt, und das so geänderte elektrische Signal dem Sender des zweiten Netzknotens zugeführt und in ein optisches Signal gewandelt wird. Der elektronische Baustein kann dabei in dem Netzknoten selbst angeordnet oder alternativ einem Netzwerkmanagement zugeordnet sein, mit dem der Netzknoten in elektrischer Kommunikation steht.

Es wird darauf hingewiesen, dass die Erzeugung eines Steuersignals unabhängig davon erfolgt, ob die am zweiten Netzknoten empfangenen Signale für den zweiten Netzknoten bestimmt oder an einen weiteren Netzknoten weitergeleitet werden. So betreffen die Steuersignale jeweils die Einstellung der Lichtleistung auf einem Übertragungsabschnitt des optischen Netzes, unabhängig von dem Inhalt der übertragenen Daten und deren Bestimmung.

In einer bevorzugten Ausgestaltung wird die optische Lichtleistung am zweiten Netzknoten dadurch erfasst, dass nach dem Wandeln des optischen Signals in ein elektrisches Signal der Fotodiodenstrom gemessen wird. Dies ermöglicht eine einfache und effektive Bestimmung der erfassten Lichtleistung.

Bei dem optischen Netzwerk handelt es sich bevorzugt um eine serielles Netzwerk, in dem optische Signale zwischen benachbarten Netzknoten übertagen werden. Besonders bevorzugt handelte es sich um ein Netzwerk mit einer Ringtopologie und/oder um ein unidirektionales Netzwerk. Grundsätzlich können jedoch auch andere Netzwerktopologien wie z.B. eine Sterntopologie oder eine Bustopologie realisiert sein. Auch kann das optische Netzwerk ein bidirektionales Netzwerk sein.

Es ist bevorzugt vorgesehen, dass das von dem zweiten Netzknoten erzeugte Steuersignal die Adresse des ersten Netzknotens im optischen Netzwerk als Zieladresse enthält. Dies ist natürlich dann von Bedeutung, wenn das erzeugte Steuersignal auf seinem Weg zu dem Zielknoten (d.h. dem Knoten, der das optische Signal ausgesandt hatte) mehrere Netzknoten passiert.

Die Zieladresse kann dann unproblematisch angegeben werden, wenn der Sender die eigene Adresse als Absenderinformation enthält. Denn dann kann als Zieladresse diese Absenderinformation angegeben werden. Dies ist jedoch nicht immer der Fall. Bei unidirektionalen Netzen ist bevorzugt vorgesehen, dass als Adresse des ersten Netzknotens (also als Adresse des Zielknotens für das Steuersignal) die Adresse des Netzknotens angegeben wird, der in dem unidirektionalen Netzwerk dem zweiten Netzknoten vorangeht. Die Netzknoten sind durchnummeriert und jeder Netzknoten (n, 1 ≤ n ≤ N) weiss, dass er optische Signale von einem bestimmten vorangehenden Netzknoten (n-1) erhält.

In einer weiteren bevorzugten Ausgestaltung ist vorgesehen, dass der erste Netzknoten nach Erhalt des Steuersignals die Lichtleistung um einen definierten Betrag heraufsetzt oder herabsetzt. Es erfolgt also ein schrittweises Anheben bzw. Herabsenken der Lichtleistung, bis ein geeigneter Wert vorliegt. Alternativ könnte das Steuersignal einen bestimmten Prozentsatz oder Wert angeben, um den die Lichtleistung angehoben oder angesenkt wird. Hierdurch würde die Anzahl der Regelschleifen reduziert werden.

In einer vorteilhaften Ausgestaltung werden die an den einzelnen Empfängern der Netzknoten erfassten optischen Lichtleistungen und/oder davon abgeleitete Werte (z.B. Dämpfungswerte) in einem Speicher gespeichert. Dabei wird bevorzugt - etwa auf der Basis der in einem solchen Speicher enthaltenen Daten - aus den aktuellen optischen Lichtleistungen die Dämpfung der einzelnen Übertragungsstrecken des Netzwerks ermittelt. Die Dämpfung der einzelnen Übertragungsstrecken des Netzwerks kann beispielsweise im Rahmen einer Netzwerkdiagnose ausgewertet werden.

Das erfindungsgemäße optisches Netzwerk weist mindestens einen Netzknoten auf, der aufweist:
- Mittel zum Erfassen der optischen Lichtleistung eines optischen Signals, das von einem anderen Netzknoten ausgesandt wurde,
- Mittel zum Feststellen, ob die erfasste optische Lichtleistung außerhalb eines definierten Bereich liegt,
- Mittel zum Erzeugen eines Steuersignals an den Netzknoten, der das optische Signal ausgesandt hat, die Lichtleistung heraufzusetzen oder herabzusetzen, sofern die erfasste optische Lichtleistung außerhalb des definierten Bereiches liegt, und
- Mittel zum Senden des Steuersignals an den Netzknoten, der das optische Signal ausgesandt hat.

Das optische Netzwerk weist des weiteren mindestens einen Netzknoten auf, der Mittel zum Heraufsetzen oder Herabsetzen der Lichtleistung des ausgesandten optischen Signals in Abhängigkeit von entsprechenden Steuersignalen besitzt.

Die Erfindung wird nachfolgend unter Bezugnahme auf die Figuren anhand eines Ausführungsbeispieles näher erläutert.
Es zeigen:
- Figur 1: ein optisches MOST-Netzwerk, in dem die optische Lichtleistung der einzelnen Sender in Abhängigkeit von der Streckendämpfung zwischen den einzelnen Netzknoten regelbar ist,
- Figur 2A: die Rahmenstruktur eines auf dem MOST-Netzwerk der Figur 1 übertragenen Datenrahmens,
- Figur 2B: einen MOST-Block mit 16 Datenrahmen gemäß der Figur 2A,
- Figur 3A: den Aufbau einer Kontrollnachricht auf dem Kontrollkanal des MOST-Netzwerks, und
- Figur 3B: den Aufbau des Nachrichtenteils einer Kontrollnachricht der Figur 2A.

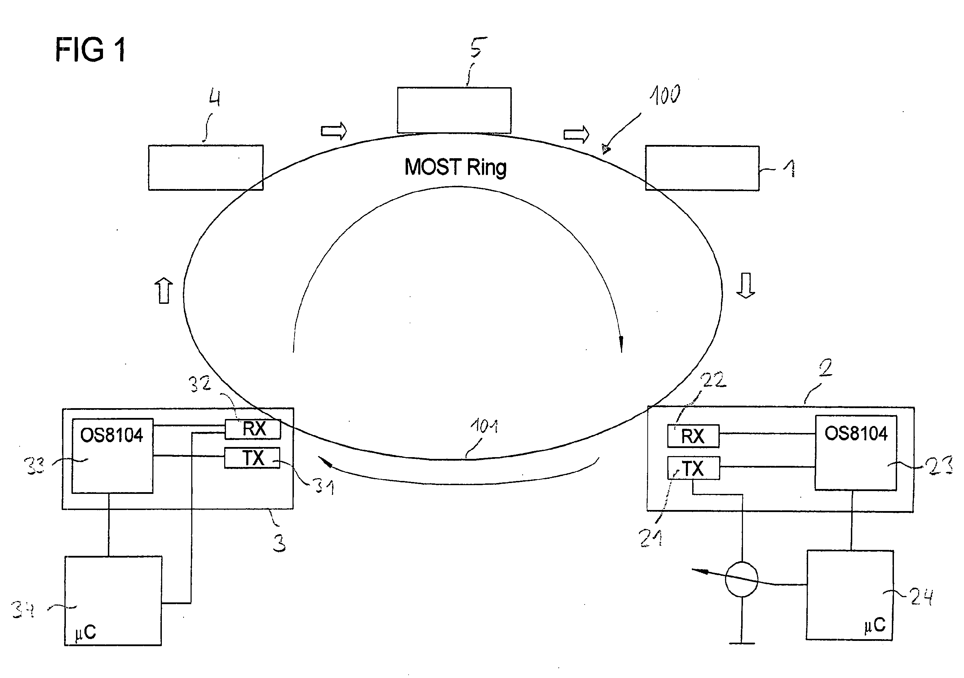

Die Figur 1 zeigt als Beispiel für ein optisches Netzwerk ein unidirektionales Netzwerk mit einer Ringtopologie. Im dargestellten Ausführungsbeispiel handelt es sich um einen MOST-Ring 100. Der MOST-Ring 100 weist als Netzknoten eine Vielzahl von MOST-Devices 1 - 5 auf. Jeder MOST-Device 1 - 5 ist eine physikalische Einheit, die mindestens einen MOST-Transceiver mit einem Sender TX und einem Empfänger RX aufweist.

Dies ist bei zwei MOST-Devices 2, 3 detailliert dargestellt. Der MOST-Device 2 weist einen Sender 21, einen Empfänger 22 und einen ersten elektronischen Baustein 23 auf. Ein des weiteren vorgesehener elektronischer Baustein, der einen Mikrocontroller 24 bildet, kann ebenfalls im MOST-Device 2 oder alternativ extern angeordnet sein. Der Mikrocontroller 24 steuert den Sender 21 und stellt insbesondere dessen Lichtleistung ein. Entsprechende Komponenten 31, 32, 33, 34 weisen der weitere MOST-Device 3 und bevorzugt auch die weiteren MOST-Komponenten 1, 4, 5 auf, ohne dass dies bei letzteren näher dargestellt ist.

Die einzelnen MOST-Devices 1 bis 5 besitzen auf der Applikationsebene mehrere Komponenten, die Funktionsblöcke genannt werden und beispielsweise einen CD-Player oder ein Telefon sind. Sie sind dem Fachmann an sich bekannt und hierauf wird im Weiteren nicht näher eingegangen.

Eine Signalübertragung in dem MOST-Ring 100 erfolgt auf folgende Weise. Wenn man beispielsweise vom MOST-Device 2 eine Nachricht an den MOST-Device 5 senden will, so wird diese Nachricht zunächst aufgrund der seriellen Struktur des Ringes an den Device 3, von diesem an den Device 4 und von dem Device 4 an den Device 5 gesandt. Das für den Device 5 bestimmte Signal wird dabei von dem Sender 22 als optisches Signal ausgestrahlt und auf den Ring 100 gegeben. Das ausgesandte Signal wird von dem benachbarten MOST-Device 3, und zwar durch dessen Empfänger 32 detektiert oder in ein elektrisches Signal umgewandelt. Der Mikrocontroller 34 prüft anhand von Signalisierungsinformationen wie Zieladresse und Nachrichtentyp, ob die empfangenen Daten für den eigenen Knoten bestimmt sind. Da dies im beschriebenen Ausführungsbeispiel nicht der Fall ist, werden die Daten ohne Änderungen, ggf. aber nach einer Signalregenerierung, an den Sender 31 gegeben und von diesem als optisches Signal ausgesandt.

Der Device 4 nimmt eine entsprechende optisch-elektrischoptische Wandlung vor. Am Device 5 wird dann erkannt, dass die übersandten Daten für den Device 5 bestimmt sind und werden die Daten vom Ring genommen. Dies wird dem Device 2 als Sendeknoten durch eine Bestätigungsnachricht mitgeteilt, damit dieser weiß, dass die ausgesandten Daten sicher empfangen wurden.

Nun besteht das Problem, dass die von einem Empfangsknoten bzw. einem Empfänger 32 empfangene Lichtleistung in einem bestimmten Bereich liegen sollte. Die empfangene Lichtleistung sollte zum einen ausreichend groß sein, um eine sichere Signaldetektion zu ermöglichen. Sollte zum anderen aber auch nicht zu groß sein, um einen Overload zu vermeiden. Auch reflektiert eine zu große Lichtleistung beim Empfänger eine unnötig große Lichtleistung beim Sender, die zu einem erhöhten Energieverbrauch und einer beschleunigten Alterung des Senders führt. Es ist somit ein definierter Bereich festgelegt, innerhalb dessen die von einem Empfänger eines Knotens 1, 2, 3, 4, 5 empfangene Lichtleistung liegen sollte. Anhand der Figur 1 wird beispielhaft für den Fall, dass ein optisches Signal von dem MOST-Device 2 zu dem MOST-Device 3 gesandt wird, ein optisches Power-Management beschrieben, das sicherstellt, dass die empfangene Lichtleistung stets in dem definierten Bereich liegt.

Das vom Sender 21 des MOST-Device 2 (nachfolgend auch als Sendeknoten 2 bezeichnet) ausgesandte optische Signal wird über eine optische Punkt-zu-Punkt Übertragungsstrecke 101 des MOST-Rings 100 an den Empfänger 32 des MOST-Device 3 (nachfolgend auch als Empfangsknoten 3 bezeichnet) übertragen. Der Empfänger 32 umfasst eine übliche Photodiode. Im Empfangsknoten 3 sind Mittel vorgesehen, die die optische Empfangs-Lichtleistung am Empfänger 32 ermitteln. Diese Mittel sind beispielsweise in den Baustein 33 integriert, der zusätzlich eine Vorverstärkung vornimmt.

Die Ermittlung der Lichtleistung erfolgt bevorzugt durch eine direkte Messung des Fotodiodenstroms des Empfängers 32. Der Fotodiodenstrom des Empfängers 32 wird dabei beispielsweise mittels eines Tiefpasses gefiltert. Der dann vorliegende Strom stellt ein Maß für die optische Eingangs-Lichtleistung dar und kann über eine Kalibrierkurve in einen Effektivwert der optischen Eingangs-Lichtleistung umgerechnet werden.

Es wird dann beispielsweise ebenfalls in dem Baustein 33 des Empfangsknotens 3 geprüft, ob die ermittelte empfangene Lichtleistung in dem definierten Bereich liegt, in dem sie liegen sollte. Sofern dies nicht der Fall ist, gibt der Empfangsknoten 3 die entsprechende Information beispielsweise an den Mikrocontroller 34 weiter. Der Mikrocontroller 34 kann dabei außerhalb des Empfangsknotens 3 angeordnet sein oder alternativ auch in diesen integriert sein. Auch kann vorgesehen sein, dass statt des Bausteins 33 der Mikrocontroller 34 prüft, ob die empfangene Lichtleistung in dem definierten Bereich liegt oder nicht. Des weiteren ist grundsätzlich auch denkbar, dass der Mikrocontroler 34 nicht konkret dem Empfangsknoten 3 zugeordnet ist, sondern einen zentralen Mikrocontroller des MOST-Ringes 100 darstellt. Im letzteren Fall würde somit eine zentrale Einheit bzw. ein Netzwerkmanagement überprüfen, ob die empfangene Lichtleistung innerhalb des gewünschten, definierten Bereiches liegt.

Der Mikrocontroler 34 bzw. ein zentrales Netzwerkmanagement erzeugen für den Fall, dass die empfangene Lichtleistung nicht innerhalb des gewünschten definierten Bereiches liegt, ein Steuersignal an den Sendeknoten 2, die Lichtleistung heraufzusetzen oder herabzusetzen, in Abhängigkeit davon, ob die empfangene Lichtleistung zu gering oder zu groß ist. Dieses Steuersignal wird bevorzugt auf den Kontrollkanal des MOST-Ringes gegeben. Hierzu werden die Kontrolldaten des empfangenen optischen und durch den Empfänger 32 in ein elektrisches Signal gewandelten Signals entsprechend überschrieben. Dies erfolgt beispielsweise durch den Mikrocontroler 34 oder zusätzliche, nicht dargestellte elektronische Bausteine.

Ein entsprechendes, hinsichtlich seiner Kontrolldaten geändertes Signal wird dann vom Sender 31 als optisches Signal auf den Ring 100 gegeben und zum Device 4 weitergeleitet.

Das erzeugte Steuersignal umfasst dabei als Zieladresse des Steuersignals die Adresse des Device 2, damit dieser erkennen kann, dass das Steuersignal für den Device 2 bestimmt ist. Aufgrund der seriellen unidirektionalen Ringstruktur kann der Device 3 dabei in einfacher Weise als Zieladresse die Device-Nummer des Knotens angeben, die in dem unidirektionalen MOST-Ring 100 vor ihm angeordnet ist. Wenn beispielsweise die einzelnen MOST-Devices die Adressen 1, 2, ...n, ... N besitzen, so gibt der jeweilige Empfangsknoten als Zieladresse die Adresse n-1 an.

Das Steuersignal wird zum Device 4, von diesem weiter zum Device 5, von diesem weiter zum Device 1 und vom Device 1 zum Device 2 geleitet. Der Device 2 erkennt anhand der Zieladresse, dass das entsprechende Steuersignal für den Device 2 bestimmt ist. Es wertet das Steuersignal dahingehend aus, ob eine Erhöhung oder eine Reduzierung der optischen Leistung verlangt wird. Dementsprechend wird die optische Leistung dann heraufgesetzt bzw. herabgesetzt.

Die entsprechend geänderte Leistung wird wiederum durch den Empfangsknoten 3 erfasst und - sofern die empfangene optische Leistung weiterhin nicht innerhalb des gewünschten, definierten Bereiches liegt - durch Aussenden eines weiteren Steuersignales geändert. Die optische Ausgangsleistung des Sendeknotens 2 wird dementsprechend solange geregelt, bis die am Empfangsknoten 3 empfangene Lichtleistung innerhalb des gewünschten Bereiches liegt.

Entsprechende Regelungen finden bevorzugt auch zwischen den weiteren MOST-Devices des Ringes statt, also zwischen MOST-Device 3 und MOST-Device 4, zwischen MOST-Device 4 und MOST-Device 5, etc. Damit kann auf jeder Übertragungsstrecke des MOST-Ringes 100 eine ideale optische Lichtleistung bereitgestellt werden.

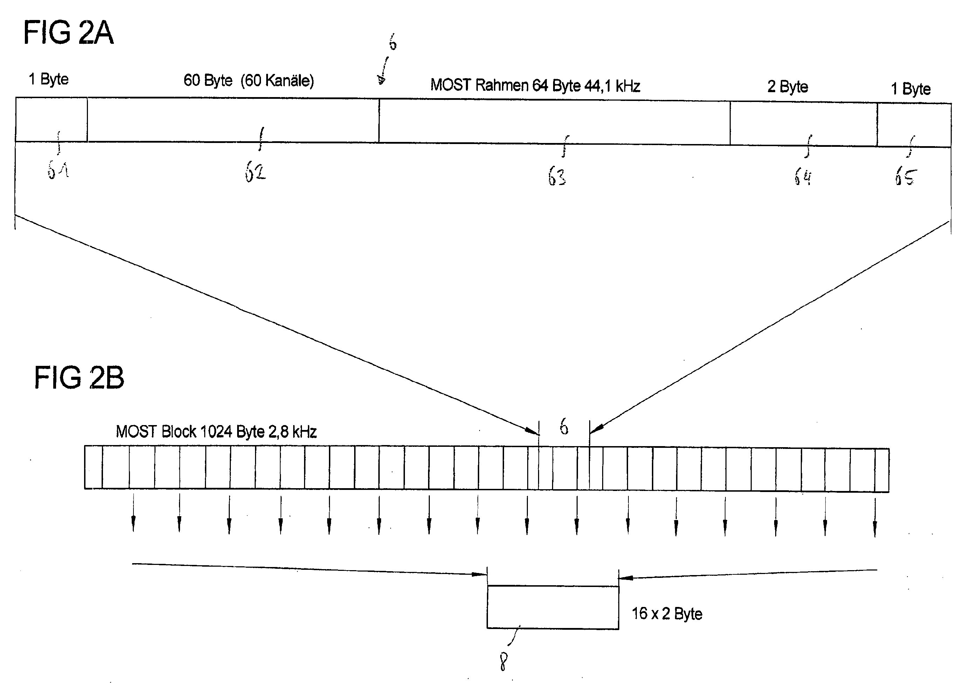

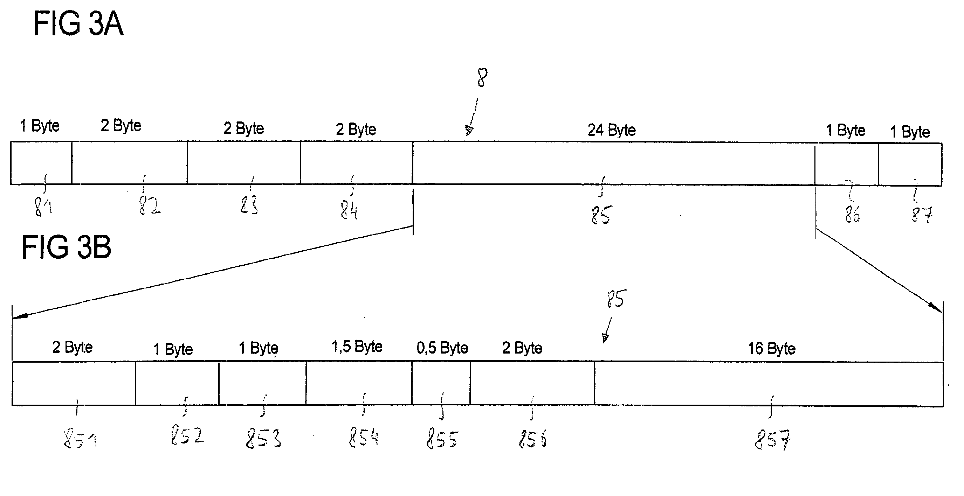

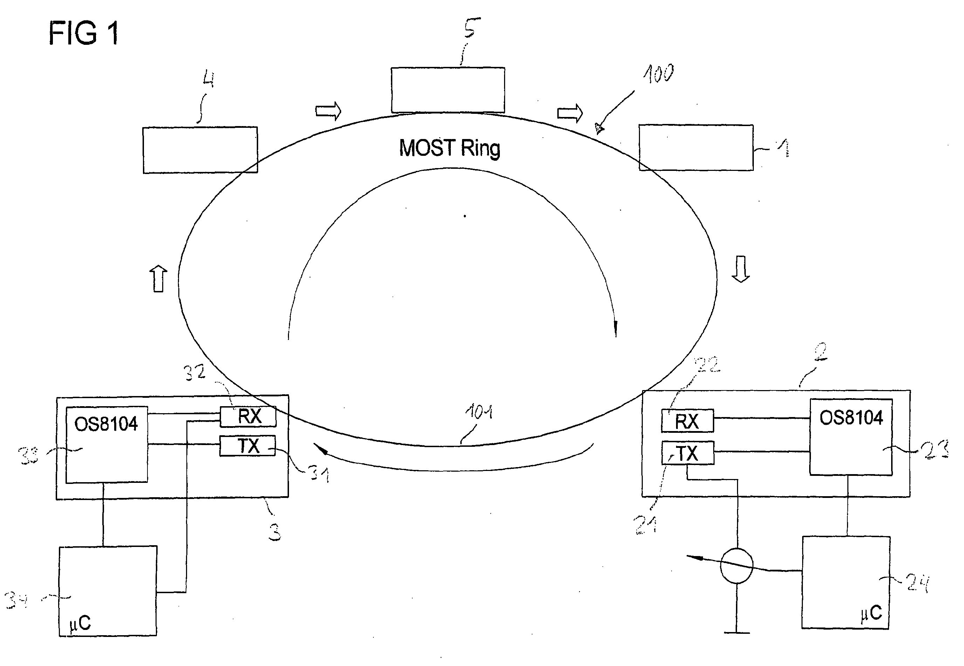

Die Erzeugung eines Steuersignals auf dem Kontrollkanal des MOST-Ringes 100 wird ergänzend anhand der Figuren 2, 2B, 3A, 3B erläutert. Die Figur 2B zeigt einen MOST-Block einer Länge von 1024 Byte, der sechzehn Rahmen 6 jeweils einer Länge von 128 Byte enthält. Die Figur 2A zeigt einen solchen MOST-Rahmen 6. Der Rahmen 6 weist einen ersten Bereich 61 mit einer Länge von 1 Byte auf, der Verwaltungs- bzw. administrative Informationen enthält. Es folgt ein zweiter Bereich 62 einer Länge von 60 Byte, der synchrone Daten für Multimedia-Anwendungen, etwa Audio- oder Videodaten enthält. Ein dritter Bereich 63 enthält asynchrone Daten, beispielsweise paketierte IP-Daten für zeitinsensitive Anwendungen. Es folgt ein vierter Bereich 64 einer Länge von 2 Byte, der Kontrolldaten enthält. Ein fünfter Bereich mit einer Länge von 1 Byte enthält CRC- und Parity-Informationen.

Da jeder Rahmen 2 Byte Kontrolldaten enthält, enthält ein MOST-Block insgesamt 16 X 2 = 32 Byte Kontrolldaten, die als Block 8 betrachtet werden können, vgl. Figur 2B unten. Die 32 Byte Kontrolldaten übertragen Daten des Kontrollkanals des MOST-Ringes.

Die Figur 3A zeigt einen entsprechenden Kontrolldaten-Rahmen 8 einer Länge von 32 Byte. Ein erster Bereich 81 einer Länge von 1 Byte enthält administrative Informationen. Ein zweiter Bereich 82 einer Länge von 2 Byte enthält die Zieladresse. Ein dritter Bereich 83 einer Länge von 2 Byte enthält die Quelladresse. Ein vierter Bereich 84 einer Länge von 2 Byte enthält den Nachrichtentyp. Ein fünfter Bereich (Nachrichtenblock) 85 einer Länge von 24 Byte enthält die eigentlichen Kontrollnachrichten. Ein sechster Bereich 86 einer Länge von einem Byte enthält die CRC-Prüfsumme. Ein siebenter Bereich 87 einer Länge von 1 Byte enthält administrative Informationen.

Figur 3B zeigt beispielhaft die Unterteilung des Nachrichtenblocks 85 der Figur 3A. Es sind wiederum verschiedene Bereiche 851-857 definiert, die bestimmte Funktionen und Parameter definieren. Im vorliegenden Kontext von Bedeutung ist, dass das Steuersignal betreffend ein Heraufsetzen oder Herabsetzen der Lichtleistung eines Lichtsenders bevorzugt in den Nachrichtenblock 85 geschrieben wird. Als Zieladresse wird in dem zweiten Bereich 82 die Adresse "n-1" angegeben.

Die Erfindung beschränkt sich in ihrer Ausgestaltung nicht auf das beschriebene Ausführungsbeispiel. Vielmehr sind zahlreiche alternative Ausgestaltungen denkbar. Beispielsweise kann die Erfindung auch in anderen Topologien, beispielsweise einer Busstruktur oder einer Sternstruktur realisiert werden. Dies ist problemlos möglich, da jeweils das Einstellen der Lichtleistung zwischen zwei benachbarten Netzknoten betrachtet wird, wobei die weitere Netztopologie keine Rolle spielt. Auch kann statt eines unidirektionalen Netzes ein bidirektionales Netz verwendet werden. Ein bevorzugter Einsatz der erfindungsgemäßen Lösung liegt insbesondere im Automotiv-Bereich, im Bereich lokaler Netzwerke und Home-Networking.

## Patentansprüche

1. Verfahren zur Optimierung der Lichtleistung in einem optischen Netzwerk (100), das eine Mehrzahl von Netzknoten (1-5) mit jeweils einem Sender (21, 31) und einem Empfänger (22, 32) aufweist, mit folgenden Schritten:
- Erzeugen eines optischen Signals an einem ersten Netzknoten (2),
- Empfangen des optischen Signals an einem zweiten Netzknoten (3),
- Erfassen der optischen Lichtleistung des optischen Signals am zweiten Netzknoten (3),
- Feststellen, ob die erfasste optische Lichtleistung außerhalb eines definierten Bereichs liegt,
- für diesen Fall Erzeugen eines Steuersignals an den ersten Netzknoten (2), die Lichtleistung heraufzusetzen oder herabzusetzen,
- Senden des Steuersignals an den ersten Netzknoten (2), und
- Heraufsetzen oder Herabsetzen der Lichtleistung des ausgesandten optischen Signals am ersten Netzknoten (2),
- wobei für den Fall, dass die erfasste optische Lichtleistung innerhalb des definierten Bereichs liegt, kein Steuersignal an den ersten Netzknoten (2) zur Änderung der Lichtleistung erzeugt wird.

2. Verfahren nach Anspruch 1, **dadurch gekennzeichnet, dass** im Rahmen einer Regelung so lange Steuersignale zum Heraufsetzen oder Herabsetzen der Lichtleistung des ersten Netzknotens (2) ausgesandt werden, bis die am zweiten Netzknoten (3) erfasste optische Lichtleistung innerhalb des definierten Bereichs liegt.

3. Verfahren nach Anspruch 1 oder 2, **dadurch gekennzeichnet, dass** das Steuersignal über das optische Netzwerk (100) an den ersten Netzknoten (2) übertragen wird.

4. Verfahren nach Anspruch 3, **dadurch gekennzeichnet, dass** die Signalübertragung in dem optischen Netzwerk (100) einem Übertragungsprotokoll unterliegt, das mindestens einen Nutzkanal zur Übertragung von Nutzdaten und mindestens einen Kontrollkanal (8) zur Übertragung von Kontroll- und Signalisierungsdaten definiert, wobei das Steuersignal auf dem Kontrollkanal (8) zum ersten Netzknoten (2) übertragen wird.

5. Verfahren nach Anspruch 2 oder 3, **dadurch**
**gekennzeichnet, dass**
- das empfangene optische Signal mittels des Empfängers (32) des zweiten Netzknoten (3) in ein elektrisches Signal gewandelt wird,
- ein elektronischer Baustein (34) für den Fall, dass die erfasste optische Lichtleistung außerhalb des definierten Bereichs liegt, dem elektrischen Signal das Steuersignal zufügt,
- das so geänderte elektrische Signal dem Sender (31) des zweiten Netzknotens (3) zugeführt und in ein optisches Signal gewandelt wird.

6. Verfahren nach mindestens einem der vorangehenden Ansprüche, **dadurch gekennzeichnet, dass** die Erzeugung eines Steuersignals unabhängig davon erfolgt, ob die am zweiten Netzknoten (3) empfangenen Signale für den zweiten Netzknoten (3) bestimmt oder an einen weiteren Netzknoten (4, 5, 1) weitergeleitet werden.

7. Verfahren nach mindestens einem der vorangehenden Ansprüche, **dadurch gekennzeichnet, dass** das Erfassen der optischen Lichtleistung des optischen Signals am zweiten Netzknoten (3) umfasst:
- Wandeln des optischen Signals in ein elektrisches Signal mittels einer Fotodiode (32) und
- Bestimmen der empfangenen Lichtleistung durch Messung des Fotodiodenstroms.

8. Verfahren nach mindestens einem der vorangehenden Ansprüche, **dadurch gekennzeichnet, dass** das optische Netzwerk ein serielles Netzwerk ist, in dem optische Signale zwischen benachbarten Netzknoten übertagen werden.

9. Verfahren nach mindestens einem der vorangehenden Ansprüche, **dadurch gekennzeichnet, dass** das optische Netzwerk eine Ringtopologie aufweist.

10. Verfahren nach mindestens einem der vorangehenden Ansprüche, **dadurch gekennzeichnet, dass** das optische Netzwerk ein unidirektionales Netzwerk ist.

11. Verfahren nach mindestens einem der vorangehenden Ansprüche, **dadurch gekennzeichnet, dass** das von dem zweiten Netzknoten (3) erzeugte Steuersignal die Adresse des ersten Netzknotens (2) im optischen Netzwerk (100) enthält.

12. Verfahren nach den Ansprüchen 10 und 11, **dadurch gekennzeichnet, dass** als Adresse des ersten Netzknotens (2) die Adresse des Netzknotens angegeben wird, der in dem unidirektionalen Netzwerk dem zweiten Netzknoten (3) vorangeht.

13. Verfahren nach mindestens einem der vorangehenden Ansprüche, **dadurch gekennzeichnet, dass** der erste Netzknoten (2) nach Erhalt des Steuersignals die Lichtleistung um einen definierten Betrag heraufsetzt oder herabsetzt.

14. Verfahren nach mindestens einem der vorangehenden Ansprüche, **dadurch gekennzeichnet, dass** die an den einzelnen Empfängern (22, 32) der Netzknoten (1-5) erfassten optischen Lichtleistungen in einem Speicher gespeichert werden.

15. Verfahren nach mindestens einem der vorangehenden Ansprüche, **dadurch gekennzeichnet, dass** aus den an den einzelnen Empfängern (22, 32) der Netzknoten (1-5) aktuell erfassten optischen Lichtleistungen die Dämpfung der einzelnen Übertragungsstrecken (101) des Netzwerks (100) ermittelt wird.

16. Verfahren nach Anspruch 15, **dadurch**
**gekennzeichnet, dass** die Dämpfung der einzelnen Übertragungsstrecken (101) des Netzwerks (100) für eine Netzwerkdiagnose ausgewertet wird.

17. Optisches Netzwerk (100), das eine Mehrzahl von Netzknoten (1-5) mit jeweils einem Sender (21, 31) und einem Empfänger (22, 32) aufweist wobei mindestens einer der Netzknoten (3) aufweist:
- Mittel (33) zum Erfassen der optischen Lichtleistung eines optischen Signals, das von einem anderen Netzknoten (2) ausgesandt wurde,
- Mittel (33) zum Feststellen, ob die erfasste optische Lichtleistung außerhalb eines definierten Bereich liegt,
- Mittel (34) zum Erzeugen eines Steuersignals an den Netzknoten (2), der das optische Signal ausgesandt hat, die Lichtleistung heraufzusetzen oder herabzusetzen, sofern die erfasste optische Lichtleistung außerhalb des definierten Bereiches liegt, wobei für den Fall, dass die erfasste optische Lichtleistung innerhalb des definierten Bereichs liegt, kein Steuersignal an den ersten Netzknoten (2) zur Änderung der Lichtleistung erzeugt wird und
- Mittel (31) zum Senden des Steuersignals an den Netzknoten (2), der das optische Signal ausgesandt hat,
- und dass mindestens ein weiterer der Netzknoten (2) Mittel (24) zum Heraufsetzen oder Herabsetzen der Lichtleistung des ausgesandten optischen Signals in Abhängigkeit von Steuersignalen, die Lichtleistung heraufzusetzen oder herabzusetzen, aufweist.

18. Optisches Netzwerk nach Anspruch 17, **dadurch gekennzeichnet, dass** die Mittel (34) zum Erzeugen eines Steuersignals das Steuersignal auf einen Kontrollkanal (8) des optischen Netzwerks (100) geben, wobei das Steuersignal über den Kontrollkanal (8) an den aussendenden Netzknoten (2) übertragen wird.

19. Optisches Netzwerk nach Anspruch 17 oder 18, **dadurch gekennzeichnet, dass** das optische Netzwerk (100) ein serielles optisches Netzwerk ist.

20. Optisches Netzwerk nach mindestens einem der Ansprüche 17 bis 19, **dadurch gekennzeichnet, dass** das optische Netzwerk (100) eine Ringtopologie aufweist.

21. Optisches Netzwerk nach mindestens einem der Ansprüche 17 bis 20, **dadurch gekennzeichnet, dass** das Netzwerk (100) ein unidirektionales Netzwerk ist.

22. Optisches Netzwerk nach mindestens einem der Ansprüche 17 bis 21, **dadurch gekennzeichnet, dass** die Mittel zur Erzeugung eines Steuersignals Mittel umfassen, die dem Steuersignal die Netzwerk-Adresse des aussendenden Netzknotens (2) hinzufügen.

23. Optisches Netzwerk nach Anspruch 21 und 22, **dadurch gekennzeichnet, dass** als Netzwerk-Adresse des aussendenden Netzknotens (2) die Adresse des im unidirektionalen Netzwerk vorangehenden Netzknotens angegeben wird.

24. Optisches Netzwerk nach mindestens einem der Ansprüche 17 bis 23, **dadurch gekennzeichnet, dass** ein zentraler Speicher vorgesehen ist, der die an den einzelnen Netzknoten (1-5) erfassten optischen Lichtleistungen und/oder davon abgeleitete Werte speichert.

## Claims

1. Method for optimizing the optical power in an optical network (100) that has a plurality of network nodes (1-5) each having a transmitter (21, 31) and a receiver (22, 32), said method having the following steps of:
- generating an optical signal at a first network node (2),
- receiving the optical signal at a second network node (3),
- detecting the optical power of the optical signal at the second network node (3),
- determining whether the optical power detected is outside a defined range,
- in this case, generating, for the first network node (2), a control signal for increasing or decreasing the optical power,
- sending the control signal to the first network node (2), and
- increasing or decreasing the optical power of the optical signal emitted at the first network node (2)
wherein, when the optical power detected is within the defined range, a control signal for changing the optical power is not generated for the first network node (2).

2. Method according to Claim 1, **characterized in that**, during a regulating operation, control signals for increasing or decreasing the optical power of the first network node (2) are emitted until the optical power detected at the second network node (3) is within the defined range.

3. Method according to Claim 1 or 2, **characterized in that** the control signal is transmitted to the first network node (2) via the optical network (100).

4. Method according to Claim 3, **characterized in that** signal transmission in the optical network (100) is subject to a transmission protocol that defines at least one user channel for transmitting user data and at least one control channel (8) for transmitting control and signaling data, the control signal in the control channel (8) being transmitted to the first network node (2).

5. Method according to Claim 2 or 3, **characterized in that**
- the receiver (32) of the second network node (3) is used to convert the received optical signal into an electrical signal,
- if the optical power detected is outside the defined range, an electronic module (34) adds the control signal to the electrical signal, and
- the electrical signal that has been changed in this manner is supplied to the transmitter (31) of the second network node (3) and converted into an optical signal.

6. Method according to at least one of the preceding claims, **characterized in that** a control signal is generated irrespective of whether the signals received at the second network node (3) are intended for the second network node (3) or are forwarded to another network node (4, 5, 1).

7. Method according to at least one of the preceding claims, **characterized in that** detecting the optical power of the optical signal at the second network node (3) involves:
- using a photodiode (32) to convert the optical signal into an electrical signal, and
- determining the optical power received by measuring the photodiode current.

8. Method according to at least one of the preceding claims, **characterized in that** the optical network is a serial network in which optical signals are transmitted between adjacent network nodes.

9. Method according to at least one of the preceding claims, **characterized in that** the optical network has a ring topology.

10. Method according to at least one of the preceding claims, **characterized in that** the optical network is a unidirectional network.

11. Method according to at least one of the preceding claims, **characterized in that** the control signal generated by the second network node (3) contains the address of the first network node (2) in the optical network (100).

12. Method according to Claims 10 and 11, **characterized in that** the address of that network node which precedes the second network node (3) in the unidirectional network is given as the address of the first network node (2).

13. Method according to at least one of the preceding claims, **characterized in that** the first network node (2) increases or decreases the optical power by a defined amount after it has received the control signal.

14. Method according to at least one of the preceding claims, **characterized in that** the optical power levels detected at the individual receivers (22, 32) of the network nodes (1-5) are stored in a memory.

15. Method according to at least one of the preceding claims, **characterized in that** the attenuation of the individual transmission paths (101) of the network (100) is determined from the optical power levels instantaneously detected at the individual receivers (22, 32) of the network nodes (1-5).

16. Method according to Claim 15, **characterized in that** the attenuation of the individual transmission paths (101) of the network (100) is evaluated for network diagnosis.

17. Optical network (100) that has a plurality of network nodes (1-5) each having a transmitter (21, 31) and a receiver (22, 32), wherein at least one of the network nodes (3) has:
- means (33) for detecting the optical power of an optical signal that was emitted by another network node (2),
- means (33) for determining whether the optical power detected is outside a defined range,
- means (34) for generating, for that network node (2) which emitted the optical signal, a control signal for increasing or decreasing the optical power if the optical power detected is outside the defined range,
- wherein, when the optical power detected is within the defined range, a control signal for changing the optical power is not generated for the first network node (2), and
- means (31) for sending the control signal to that network node (2) which emitted the optical signal,
- and wherein at least one further one of the network nodes (2) has means (24) for increasing or decreasing the optical power of the emitted optical signal as a function of control signals for increasing or decreasing the optical power.

18. Optical network according to Claim 17, wherein the means (34) for generating a control signal pass the control signal to a control channel (8) of the optical network (100), the control signal being transmitted to the emitting network node (2) via the control channel (8).

19. Optical network according to Claim 17 or 18, **characterized in that** the optical network (100) is a serial optical network.

20. Optical network according to at least one of Claims 17 to 19, **characterized in that** the optical network (100) has a ring topology.

21. Optical network according to at least one of Claims 17 to 20, **characterized in that** the network (100) is a unidirectional network.

22. Optical network according to at least one of Claims 17 to 21, **characterized in that** the means for generating a control signal comprise means which add the network address of the emitting network node (2) to the control signal.

23. Optical network according to Claims 21 and 22, **characterized in that** the address of the preceding network node in the unidirectional network is given as the network address of the emitting network node (2).

24. Optical network according to at least one of Claims 17 to 23, **characterized in that** provision is made of a central memory that stores the optical power levels detected at the individual network nodes (1-5) and/or values derived therefrom.

## Revendications

1. Procédé d'optimisation de la puissance lumineuse dans un réseau (100) optique qui a une multiplicité de noeuds (1 à 5) de réseau ayant, respectivement, un émetteur (21, 31) et un récepteur (22, 32), comprenant les stades dans lesquels :
- on produit un signal optique sur un premier noeud (2) de réseau ;
- on reçoit le signal optique sur un deuxième noeud (3) de réseau ;
- on relève la puissance lumineuse optique du signal optique sur le deuxième noeud (3) de réseau ;
- on constate si la puissance lumineuse optique relevée est en dehors d'une plage définie ;
- dans ce cas, on produit un signal de commande sur le premier noeud (2) de réseau, qui augmente ou qui diminue la puissance lumineuse ;
- on envoie le signal de commande au premier noeud (2) de réseau ; et
- on augmente ou on diminue la puissance lumineuse du signal optique émis sur le premier noeud (2) de réseau ;
- dans lequel, dans le cas où la puissance lumineuse optique relevée est dans la plage définie, on ne produit pas de signal de commande sur le premier noeud (2) de réseau pour modifier la puissance lumineuse.

2. Procédé suivant la revendication 1, **caractérisé en ce que**, dans le cadre d'une régulation, on émet des signaux de commande pour augmenter ou pour diminuer la puissance lumineuse du premier noeud (2) de réseau jusqu'à ce que la puissance lumineuse optique relevée sur le deuxième noeud (3) de réseau soit dans la plage définie.

3. Procédé suivant la revendication 1 ou 2, **caractérisé en ce que** l'on transmet le signal de commande au premier noeud (2) de réseau par le réseau (100) optique.

4. Procédé suivant la revendication 3, **caractérisé en ce que** l'on soumet la transmission du signal dans le réseau (100) optique à un protocole de transmission qui définit au moins un canal utile de transmission de données utiles et au moins un canal (8) de contrôle de transmission de données de contrôle et de signalisation, le signal de commande étant transmis au premier noeud (2) de réseau sur le canal (8) de contrôle.

5. Procédé suivant la revendication 2 ou 3, **caractérisé en ce que**
- on transforme en un signal électrique le signal optique reçu au moyen du récepteur (32) du deuxième noeud (3) de réseau ;
- un module (34) électronique ajoute, dans le cas où la puissance lumineuse optique relevée est en dehors de la plage définie, le signal de commande au signal électrique ;
- on envoie le signal électrique ainsi modifié à l'émetteur (31) du deuxième noeud (3) de réseau et on le transforme en un signal optique.

6. Procédé suivant au moins l'une des revendications précédentes, **caractérisé en ce que** l'on effectue la production d'un signal de commande indépendamment du point de savoir si les signaux reçus sur le deuxième noeud (3) de réseau sont destinés au deuxième noeud (3) de réseau ou sont acheminés plus loin à un autre noeud (4, 5, 1) de réseau.

7. Procédé suivant au moins l'une des revendications précédentes, **caractérisé en ce que** le relevé de la puissance lumineuse optique du signal optique sur le deuxième noeud (3) de réseau comprend :
- la transformation du signal optique en un signal électrique au moyen d'une photodiode (32) ; et
- la détermination de la puissance lumineuse reçue par mesure du courant de la photodiode.

8. Procédé suivant au moins l'une des revendications précédentes, **caractérisé en ce que** le réseau optique est un réseau série dans lequel des signaux optiques sont transmis entre des noeuds de réseau voisins.

9. Procédé suivant au moins l'une des revendications précédentes, **caractérisé en ce que** le réseau optique a une topologie annulaire.

10. Procédé suivant au moins l'une des revendications précédentes, **caractérisé en ce que** le réseau optique est un réseau unidirectionnel.

11. Procédé suivant au moins l'une des revendications précédentes, **caractérisé en ce que** le signal de commande produit par le deuxième noeud (3) de réseau contient l'adresse du premier noeud (2) de réseau dans le réseau (100) optique.

12. Procédé suivant les revendications 10 et 11, **caractérisé en ce que** l'on indique comme adresse du premier noeud (2) de réseau l'adresse du noeud de réseau qui précède le deuxième noeud (3) de réseau dans le réseau unidirectionnel.

13. Procédé suivant au moins l'une des revendications précédentes, **caractérisé en ce que** le premier noeud (2) de réseau augmente ou diminue après avoir reçu le signal de commande la puissance lumineuse d'un montant défini.

14. Procédé suivant au moins l'une des revendications précédentes, **caractérisé en ce que** l'on mémorise dans une mémoire les puissances lumineuses optiques relevées sur les divers récepteurs (22, 32) des noeuds (1 à 5) du réseau.

15. Procédé suivant au moins l'une des revendications précédentes, **caractérisé en ce que** l'on détermine à partir des puissances lumineuses optiques relevées sur les divers récepteurs (22, 32) des noeuds (1 à 5) du réseau l'atténuation des diverses zones (101) de transmission du réseau (100).

16. Procédé suivant la revendication 15, **caractérisé en ce que** l'on exploite l'atténuation des diverses zones (101) de transmission du réseau (100) pour effectuer un diagnostic du réseau.

17. Réseau (100) optique qui a une multiplicité de noeuds (1 à 5) de réseau ayant, respectivement, un émetteur (21, 31) et un récepteur (22, 32), au moins l'un des noeuds (3) de réseau ayant :
- un moyen (33) pour relever la puissance lumineuse optique d'un signal optique qui a été émis par un autre noeud (2) de réseau ;
- un moyen (33) de constatation si la puissance lumineuse optique relevée est en dehors d'une plage définie ;
- un moyen (34) de production d'un signal de commande sur le noeud (2) de réseau qui a émis le signal optique pour augmenter ou diminuer la puissance lumineuse dans la mesure où la puissance lumineuse optique relevée est en dehors de la plage définie alors que, dans le cas où la puissance lumineuse optique relevée est dans la plage définie, un signal de commande n'est pas produit sur le premier noeud (2) de réseau pour modifier la puissance lumineuse ; et
- un moyen (31) d'émission du signal de commande sur le noeud (2) de réseau qui a émis le signal optique ;
- et en ce qu'au moins un autre des noeuds (2) de réseau a un moyen (24) d'augmentation ou de diminution de la puissance lumineuse du signal optique émis en fonction de signaux de commande qui augmentent ou diminuent la puissance lumineuse.

18. Réseau optique suivant la revendication 17, **caractérisé en ce que** le moyen (34) de production d'un signal de commande donne le signal de commande à un canal (8) de contrôle du réseau (100) optique, le signal de commande étant transmis au noeud (2) de réseau émetteur par le canal (8) de contrôle.

19. Réseau optique suivant la revendication 17 ou 18, **caractérisé en ce que** le réseau (100) optique est un réseau optique série.

20. Réseau optique suivant au moins l'une des revendications 17 à 19, **caractérisé en ce que** le réseau (100) optique a une topologie annulaire.

21. Réseau optique suivant au moins l'une des revendications 17 à 20, **caractérisé en ce que** le réseau (100) optique est un réseau unidirectionnel.

22. Réseau optique suivant au moins l'une des revendications 17 à 21, **caractérisé en ce que** le moyen de production d'un signal de commande comprend un moyen qui ajoute au signal de commande l'adresse de réseau du noeud (2) de réseau émetteur.

23. Réseau optique suivant la revendication 21 et 22, **caractérisé en ce qu'**il est indiqué comme adresse de réseau du noeud (2) de réseau émetteur l'adresse du noeud de réseau précédent dans le réseau unidirectionnel.

24. Réseau optique suivant au moins l'une des revendications 17 à 23, **caractérisé en ce qu'**il est prévu une mémoire centrale qui mémorise les puissances lumineuses optiques relevées sur les divers noeuds (1 à 5) de réseau et/ou des valeurs qui s'en déduisent.
